# EUROPEAN PATENT SPECIFICATION

(11) **EP 0 670 821 B1**
(45) Date of publication and mention of the grant of the patent: **02.11.2000**
(21) Application number: 93918105.3
(22) Date of filing: 30.08.1993
(51) Int. Cl.: C05B 17/00, C05F 11/08, C05G 1/00

(54) **FERTILISERS COMPRISING INORGANIC PHOSPHATE AND PHOSPHATE SOLUBILISING FUNGUS**
ANORGANISCHES PHOSPHAT UND PHOSPHAT AUFLÖSENDE PILZE ENTHALTENDE DÜNGEMITTEL
ENGRAIS COMPRENANT DU PHOSPHATE INORGANIQUE ET UN CHAMPIGNON DISSOLVANT LE PHOSPHATE

(43) Date of publication of application: 13.09.1995
(73) Proprietor: Sieber Technology Limited, Thames (NZ)
(72) Inventor: SINCLAIR, Clive Prebble, Waiuku 1852 (NZ)
(74) Representative: Waldren, Robin Michael
(86) International application number: NZ9300076
(87) International publication number: WO9506623

(56) References cited:
- EP-A- 0 284 236
- US-A- 4 589 226
- CHEMICAL ABSTRACTS, vol. 73, no. 19, 9 November 1970, Columbus, Ohio, US; abstract no. 95666r, AGNIHOTRI, V.P. 'Solubilization of insoluble phosphates by some soil fungi isolated from nursery seedbeds' page 104 ; & CAN. J. MICROBIOL.
- CHEMICAL ABSTRACTS, vol. 103, no. 15, 14 October 1985, Columbus, Ohio, US; abstract no. 119530h, DEODORAY, S.D. 'Solubilization of tricalcium phosphate by fungi from the rhizosphere of grapevine' page 385 ; & J. UNIV. POONA SCI. TECHNOL.
- CHEMICAL ABSTRACTS, vol. 90, no. 3, 15 January 1979, Columbus, Ohio, US; abstract no. 21335m, BARTHAKUR H.P. 'Solubilization of insoluble phosphate by some fungi isolated from the rhizosphere of rice' page 513 ; & INDIAN J. AGRIC. SCI.
- DATABASE WPI Section Ch, Week 8702, Derwent Publications Ltd., London, GB; Class C04, AN 87-011737 & JP,A,61 270 290 (AZERON JAPAN KK) 29 November 1986

## Description

### TECHNICAL FIELD

The present invention is directed to fertilisers. More specifically, the present invention is directed to enhancing phosphate solubilisation by the action of fungal and/or microbial action. A preferred embodiment of the invention comprises suitable fungus, micro-organisms or reproductive materials therefor combined with a mineral substrate. Typically the mineral substrate comprises a phosphate material. In many embodiments a suitable nutrient is included.

### BACKGROUND ART

Phosphorus, one of the main trace elements, is generally added to pasture in the form of superphosphate, an acidified form of rock phosphate. Compared with normal rock phosphate, which is generally and predominantly calcium phosphate, superphosphate is much more soluble and is available to plants relatively quickly.

Rock phosphate is still used in the fertiliser industry for application to pasture, particularly where the more rapid release of the superphosphate is not required, or where a long term slow release of plant phosphorus may be preferred. Economics also comes into play as rock phosphate needs only to be milled whereas superphosphate requires, in addition, treatment of the raw phosphate material with acid. Over a large area, cost differences can become significant. During lean times many farmers may be faced with a choice of spreading more expensive superphosphate, cheaper rock phosphate (which may not be suitable for the particular application) or not fertilising with a phosphorus containing material at all. Furthermore, the acidic nature of superphosphate often requires liming if the normal soil pH is to be maintained, this being an additional cost factor.

A growing trend towards the use of naturally occurring fertilisers is also occurring. There are relatively few natural fertilisers, with the possible exception of fish based compositions, which are high in phosphorus. However these may over supply other elements in addressing a phosphorus deficiency. Rock phosphate, in contrast, lacks the faster release characteristics of superphosphate or the fish based composition.

Further, there are many micro-organisms and fungi, many of which occur naturally in many soils, which are advantageous to have in pasture as enhancing or encouraging plant growth. Some of these assist the plant in taking nutrients from the soil while many others are able to assist the release of nutrients, otherwise bound up, to be available to plant life. While many of these are known, not all are present in all soils and quite often only appear as a result of introduction through stock and agricultural equipment from an infected location. While some benefit may be gained through the introduction of such 'helpful' life forms, there appears to be no generally available method allowing the average farmer to introduce them i.e. it is not simply a case of sprinkling seeds or spores over a paddock.

One method which has been used is to treat seeds with bacteria inoculum prior to planting. However this is not applicable for existing pasture, and also makes the end user dependent upon the availability of such inoculated seeds. Furthermore, inoculants are typically localised to the area of the plant's roots where it will not come into contact with insoluble phosphate materials which may be applied to the top of the soil. Instead, what would be preferable is an agent able to act directly on the phosphate material to enable the nutrients to leach into the soil for plant use.

Several prior art documents address phosphate solubilisation. For instance, US4589226 is directed to phosphate pellets comprising a consolidated mixture of finely ground phosphate, finely ground dried hydrogel nutrient, and a phosphobacteria in a dried form.

The specification of EP284236 describes a particular species of phosphate solubilising bacteria. It mentions that phosphate material may be introduced to the soil separately, but that the inoculum should not come into contact with the phosphate material beforehand.

Some further material comprising Chemical Abstracts (Nos. 95666, 119530, and 21335) disclose some phosphate solubilising fungi. Quite clearly there is a need for a product which can address the foregoing problems. It is therefore an object of the present invention to address these problems or at least to provide the public with a useful choice.

Further aspects and advantages of the present invention will become apparent from the ensuing description which is given by way of example only.

### DISCLOSURE OF INVENTION

According to one aspect of the present invention there is provided a substantially non-liquid fertiliser composition comprising: a solid substrate comprising a substantially insoluble phosphate material impregnated with an introduced liquid nutrient for the support or establishment of at least one phosphate solubilising fungus, micro-organism, or reproductive material therefor. According to another aspect of the present invention there is provided a fertiliser composition, substantially as described above, which includes at least one member or reproductive material therefor, of a group comprising:
*Fusarium oxysporum, Fusarium solani, Aspergillus Niger, Aspergillus candidus, Aspergillus flavus, Aspergillus ustus, Penicillium janthinellum, Penicillium* sp., *Sclerotium rolfsii, Cylindrocladium* sp., *Trichoderma viride, Glocladium* sp., *Verticillum albo-atrum, Penicillium bilaji, Mortierella nana, Mortierella longicollis* and *Aspergillus terrens.*

According to another aspect of the present invention there is provided a fertiliser composition, substantially as described above, comprising:
- a solid substrate comprising a substantially insoluble phosphate material impregnated with an introduced liquid nutrient for the support or establishment of at least one phosphate solubilising fungus, micro-organism, or reproductive material therefor,
- particles of said solid substrate having a gelled coating

According to another aspect of the present invention there is provided a method for the preparation of a fertiliser composition comprising the introduction of a liquid nutrient capable of establishing or supporting an introduced phosphate solubilising fungus, micro-organism, or reproductive material therefor, to a mineral substrate comprising a substantially insoluble phosphate material.

According to another aspect of the present invention there is provided a method for increasing the solubilisation of substantially insoluble phosphate fertiliser materials comprising the introduction of impregnation of a liquid nutrient, and phosphate solubilising fungus, micro-organisms or reproductive material therefor to said phosphate fertiliser materials prior to their application to soil or pasture.

According to another aspect of the present invention there is provided a method for increasing the availability of phosphorus for plants comprising the application to soil or pasture of a composition comprising a phosphate fertiliser material, a phosphate solubilising fungus, micro-organisms or reproductive material therefor, and a liquid nutrient impregnated into the phosphate fertiliser material capable of sustaining, supporting or establishing the growth of same.

Preferred embodiments of the invention will typically comprise a substrate, which may take a number of different forms, impregnated with a liquid nutrient suitable for the support of phosphate solubilising organisms. The nature of the substrate will be discussed next.

Embodiments of the present invention will typically comprise a mineral substrate. The mineral substrate serves to act as a base to which biologically active material (i.e. fungus, micro-organism (including microbes) and/or reproductive material therefor) can be introduced. As typically the action of the biologically active material is to improve phosphate solubilisation and release into the soil, the mineral substrate will normally comprise a phosphate material. While virtually any phosphate material may be used, it will typically comprise an insoluble phosphate in preference to more soluble forms such as 'super phosphate'. A good example of the insoluble phosphates include the so-called 'rock phosphates', some specific examples of which are the North Carolina rock phosphates (NCRP), Peruvian rock phosphates (available in New Zealand under the name SECURAROCK ™), or the Egyptian rock phosphates (marketed in New Zealand under the name QUINPHOS™). However, it should be appreciated that other forms of rock, and insoluble, phosphates exist which may be used within the present invention, though it is considered that phosphate materials commercially exploited for fertiliser application will usually be selected. It is also noted that phosphate materials present in the mineral substrate need not be restricted to the generally less expensive insoluble forms.

The mineral substrate may solely comprise one or more rock or insoluble phosphate materials. However, in other embodiments, additional constituents may be present. These may be present as discrete particles in a composition or incorporated into more sophisticated 'pellet' type forms, to be discussed herein.

Typically the mineral substrate will comprise a solid granule or pellet through may also comprise substantially a powdered material. In most cases the average particle size will not exceed 10mm as larger material is not readily spread by most commercial equipment and large fragments may be a hindrance to farming. As, to some extent, nutrient and mineral release (per weight of binding material) is dependent upon particle size (powdered forms generally having a faster release), particle size can be used to help govern the release characteristics of the product.

The substrate may comprise many materials though will often be substantially mineral in nature. The substrate may comprise naturally occurring materials, such as rock phosphate, broken where necessary to an appropriate size. Alternatively, it may comprise a reconstituted conglomerate or pellet of, substantially, mineral constituents. However, the various embodiments will almost invariably include a phosphate material and may, for example, comprise powdered rock phosphate pressed into a pellet form of a uniform size.

By way of example, additional mineral constituents may comprise an aluminosilicate, which term wherever used herein shall often refer to an aluminosilicate clay. There are many such materials known and include, by way of example only, vermiculite, bentonite (montmorillonite), sepiolite-attapulgite, illite, chlorite, halloysite and kaolinite. One preferred aluminosilicate for use in the present invention is bentonite which is readily available. Bentonite generally refers to a clay comprising more than 70% montmorillonite.

If the process allows, it may be desirable to incorporate alternative or additional mineral constituents into the pellet. These may be, for example, lime, clays, zeolites or various minerals. These may act as nutrients for the micro-organisms or fungi, or comprise plant available nutrients to be eventually released to a plant. They may modify the physical characteristics of the pellet, such as by helping cement the pellet together, or adjusting the porosity which can affect how well a pellet may be impregnated or how quickly it 'releases' its contents after application to pasture.

As can be appreciated, the mineral substrate will generally act as a support for any biologically active material. Where substantially non-processed materials, such as untreated insoluble phosphate, are used the available options may be limited. However, there is room for great variation in the nature of a product if one or more constituents are broken down and re-combined to form a mineral substrate. As can be appreciated, parameters such as the porosity, fertiliser elemental content, particle size and other variables can be rigidly controlled and almost infinitely varied. However it will also be appreciated that this will increase the number of manufacturing steps and thus, the cost of the end product.

The reconstitution of blended materials can also allow for the introduction of biologically active material in a substantially dry form and also may more readily allow for its even distribution throughout the product. The addition of liquid forms may be used to initiate selling or cementing of particles or pellets.

As can be appreciated there are many possible combinations which allow a pellet having a wide range of physical or practical characteristics to be obtained. It shall be assumed that a reader skilled in the art will be able to select components suitable for their needs and combine them into a suitable pellet. Similarly the manufacture of bound or pressed pellets is well known and the many possible techniques will not be described herein.

Another constituent which may be included in a fertiliser composition, and which may be present as part of the mineral substrate or added subsequently, is a hydrating agent. Some non-reversible hydrating agents have been mentioned already and these include unslaked limes, calcium sulphate, gypsum and other cementing type constituents. These may be included to help cement particles or granules together, or to absorb excess moisture such as from a liquid nutrient (if added) or a fluid media for the introduction of biologically active material. The effect in this case will absorb the added moisture so that the end product is still a substantially dry, flowable material.

Other hydrating agents are known and these may not necessarily be binding or cementing type materials. For instance, calcium chloride and various silica gels are among other well known hydrating agents (the term 'hydrating agent' or 'hydrating constituent' being used to indicate a substance capable of absorbing or adsorbing moisture). Zeolite materials may also be used as hydrating agents.

Also of use are what shall be termed as reversible hydrating agents, in which water taken in is available for use by the biologically active material. Useful in this regard are many gels such as gelatine and agars though many more are also known. One fish based fertiliser, suitable for use as a nutrient in the present invention, includes seaweed whose proportion can be varied during manufacture to alter the viscosity of the resulting product. This product is available in Australasia from Moana Fertilisers Limited or Sieber Agricultural Limited of Waiuku, New Zealand.

Another substance of use are the newer cross-linked polymers, some of which are biodegradable (usually after a period of several years). Some of these have been recently put to use in potting mixes and the applicant is aware of at least one product available in Australia under the trade name of AGROSOKE™.

Hydrating agents and constituents may be employed in the present invention to not only to absorb excess moisture so that a substantially dry product results or to act as a cementable binder, but also to sustain the life of added biologically active material. This can then be used to usefully extend the bulk storage life of the fertiliser composition according to the present invention.

The second major component of embodiments of the present invention is a nutrient introduced to the substrate by impregnation in a liquid form. This nutrient will be useful to phosphate solubilising bacteria, typically the introduced biologically active material. Typically these introduced nutrient(s) will also be plant useful nutrients and thus a dual purpose may be provided - there is a nutrient suitable for sustaining introduced biological material, and there is a means for altering the NPKS characteristics of the fertiliser which can extend the range of applicability for the end product as a fertiliser.

A nutrient may comprise materials commonly used as plant fertilisers and the invention represents an alternative means of preparing a high phosphorus, multi-elemental fertiliser. Often these 'normal fertilisers' will also enhance the growth of the contained fungi and micro-organisms though nutrient blends more specific to the particular targeted or included organism may be used. In most cases a nutrient acting as a nitrogen source is sufficient but should not be in such a high or readily available concentration as to adversely affect any targeted or included organisms.

While many nitrogen providing nutrient sources may be used, some preferred embodiments of the present invention make use of nutrients containing ammonium compounds or amines. Many ammonium and amine based fertilisers are known and may be employed. However, it is noted that many fish based fertilisers are also rich in amines and, depending on the production process, a typical ammoniacal smell can often be detected. Typically the use of ammonium, and amine containing, nutrients will be beneficial as recent research by others have suggested that the nitrification of free ammonia may increase the solubility of North Carolina phosphate rock. This research (published in Compost Science and Utilisation, Premier Issue, 1993) supports the applicant's observations in trials that the use of a fish based fertiliser product on phosphate rock noticeably increased its solubility and, therefore, availability for plants. In some instances a significant ammoniacal smell was detected after fungal growth had been established. The use of nutrients able to be readily converted into free ammonia for subsequent nitrification processes may be especially useful in some embodiments, and may be a means by which the rate of release of phosphorous from the insoluble phosphate can be varied.

The aforementioned fish based fertiliser product, based on the acid and (optionally) base hydrolysis of marine matter, has been found to be effective in trials. Granular mineral binding material impregnated with the fish fertiliser was found to support the growth of fungal and plant matter after a relatively short period though this will depend upon a number of factors such as temperature and seasonal variations, the presence of fungus or micro-organisms in the soil, moisture content and rainfall etc. It is anticipated that equivalent products may also be successfully used as a nutrient.

Another useful nutrient, other than those already described, can include the typical liquid waste from many meat processing plants, which is often rich in animal protein. Animal protein is a useful nutrient source for many biologically active materials which may be introduced.

To improve the efficiency of ammonia release, if this avenue is to exploited, biological material readily able to convert available nutrients into free ammonia may be included within the composition. Biological material associated with the subsequent nitrification of free ammonia may also be included.

Nutrients may be introduced to the mineral substrate in a variety of manners. For instance if provided in a dry form, they may be dusted or coated onto the mineral substrate. Where the mineral substrate exists in a substantially powered or granular form, dry nutrients may merely be blended in to the mixture. In embodiments where pellets are manufactured, rather than relying on natural granules of a substance, it may be possible to use 'dry' nutrients.

Where the mineral substrate is present in larger lumps (though this may also be applied to other embodiments) it may be easier to apply a liquid based nutrient which can be used to impregnate the particles. This may comprise making an aqueous solution of the desired nutrients though many nutrients may already come in a liquid form able to be directly applied. In this case the granule or pellet should be porous to the solvent chosen. A greater degree of control over porosity is possible for manufactured pellets though most rock phosphate and other minerals are porous to, and will absorb, water and common solvents.

A nutrient, where provided, can be a useful carrier for introducing biological material to the mineral substrate. This may merely comprise dispersing a suitable source of the active material into the nutrient (preferably a liquid form) prior to its introduction to the mineral substrate. In some cases, the biological material may even be cultured in the nutrients prior to its introduction to the mineral substrate.

A range of suitable biological materials are available. Preferred amongst the introduced biological material are those which are phosphate solubilising i.e. are recognised for freeing phosphorous from insoluble phosphate materials. Also preferred are those which have been previously mentioned, such as those able to liberate free ammonia from added nutrients or nutrients present in the soil, and those associated with the nitrification of free ammonia. These are well known within the field.

Both fungus and microbes are considered to be useful in the present invention and it is possible that a combination of, or more than one of, each group may be employed in the present invention. It is also considered that some of these useful biological materials may already be present in certain nutrients though it is likely that they will be cultured to an acceptable level before being incorporated into the present invention. It is also possible that growth and reproduction may continue while the product is stored prior to application and this may be taken into account in the production of a fertiliser composition according to the present invention. In some instances it may be desirable to store the substantially completed product for a given period of time in order for certain biological materials present to establish themselves to a desired level.

Useful fungi for use in the present invention include member of the species *Aspergillus*, *Fusarium* and *Penicillium.* Most members of these fungal groups are useful though in particular the following may be considered:
*Fusarium Oxysporum*, *Fusarium Solani*, *Aspergillus Niger, Aspergillus Candidus, Aspergillus Flavus*, *Aspergillus Ustus, Penicillium Janthinellum, Penicillium* sp., *Sclerotium Rolfsii*, *Cylindrocladium* sp., *Trichoderma viride*, *Glocladium* sp., *Verticillum albo-atrum*, *Penicillium bilaji*, *Mortierella nana*, *Mortierella longicollis* and *Aspergillus terrens.*

Some other micro-organisms of use in the present invention include *Bacillus Megatherium phosphaticum* and strains thereof, Gram-positive bacteria and members of the species *Pseudomonas*.

*Aspergillus niger*, and *Sclerotium rolfsii* are considered as more desirable members of the list, whereas members of the genus *Rhizoctonia* and *Pythium* are considered to be only minimally, if at all, effective. However it is to be noted that the foregoing lists are not meant to be exhaustive but are provided by way of example only. It is noted that not all members of named species may always be useful in all embodiments and thus some experimentation for various embodiments may be recommended when implementing some of the large number of variations possible within the scope of the present invention.

As an alternative for the introduction of the living organisms, reproductive material able to establish into the desired biological material may also be provided. Fungal spores, where able to be collected, may also be introduced into a fertiliser composition and in some cases this may be useful for extending the shelf life of fertiliser compositions. However this is generally dependent upon the conditions of storage being chosen which is conducive to the existence of the spore or reproductive material, yet will not prematurely encourage their growth while in storage.

As previously mentioned, the introduction of the nutrient and/or a culture material to the binder material is preferably by impregnation. While either or both these components may be incorporated during formation of a pellet, they may also added by allowing the liquid to soak into the substrate material. The liquid may be applied by spray, dipping or mixing of dry and wet material. However, too high a concentration of nutrients in the liquid nutrient mixture may best be avoided unless the impregnation method allows for the relatively even distribution of the liquid material to the substrate.

Various other modifications may be made to a fertiliser composition according to the present invention. For instance, biological material may be introduced in a coating to the particles of the impregnated composition. This may comprise a gelled layer, which could also include the nutrient. A thickened seaweed and fish based fertiliser is available upon request from Moana Fertilisers Limited or Sieber Agricultural Limited of Waiuku, New Zealand. In this case an increased proportion of seaweed gels the fish fertiliser.

Alternatively the coating may be nutrient free, with the nutrients (if provided) being introduced into the substrate.

Alternatively the coating may be free of biological material, which is introduced into the substrate. The coating may help preserve moisture content and act as a barrier.

The coating may swell when wetted (in the field) or otherwise 'release' or allow fungus within the particle (or coating) to begin to grow. A hydrating cross linking polymer may be used. In these embodiments the coating may act also as a semi-protective wrapper signalling when biological growth is to occur.

As another example of modifications, the nature of the composition will affect how it may be used and applied. Typically it is preferred that the end product is a substantially dry flowable material as this would enable its application by relatively common dry material spreaders. In many cases the available equipment will still manage a damp product though it is still generally desirable that the composition is able to flow. The use of hydrating agents and constituents has been described to absorb excess moisture which may be added during various stages of production. However it is also noted that a distinction is to be made with hygroscopic and deliquescent materials which could continue absorbing moisture from the atmosphere and result in a 'wet' product. Consequently, where possible, the use of hygroscopic or deliquescent materials should be eliminated or reduced.

A modification which may be incorporated into the invention is to coat, impregnate or otherwise treat particles with an agent able to promote their free flowing. Many dusting agents such as talc, various stearates etc. could be used in this regard. Some of these may also be partially water repellent which can be useful in preventing further absorption of water by the particles. In addition it may also help reduce moisture lost by the particles which can be useful for sustaining biological material present. However a coating agent which will be readily removed after application of the fertiliser composition is generally preferred unless a slow or delayed release product is desired. The use of separate constituents which reduce moisture loss (and which need not necessarily comprise a free flowing agent) may also be applied.

The particle size is a matter of user choice and will also be influenced by the method of manufacture. It is envisaged that most embodiments of the present invention will have an average particle size such that at least 90% will be able to pass though a sieve with a mesh size of 10mm by 10mm. This would be regarded as a coarse embodiment and may not find universal application. Probably more useful is a finer grade in which 90% of the particles will pass through a sieve with a rectangular mesh of 3mm by 3mm. In ultra fine embodiments, the composition may be substantially powdered. Further aspects and advantages of the invention will become apparent from the ensuing examples, which are not intended to be restrictive but to illustrate but some aspects of the present invention.

### BEST MODES FOR CARRYING OUT THE INVENTION

### Example 1

A nutrient broth comprising a suitable fungus and micro-organism is prepared and maintained. This could be, for instance, a fungus of the genus *Fusarium* though need not be restricted to this alone. Other biological materials have been described previously. Standard biology techniques for growing and maintaining cultures may be followed. From this parent broth is drawn off fractions to be used in preparation of a product.

The nutrients present in the broth may be according to that used in standard biological growth procedures though will most likely comprise a nitrogen source. The broth may also be an aqueous solution of ammonium or another nitrate. Early trials have also shown some success with aqueous fertiliser compositions derived from fish and marine matter. The greater range of nutrients here would tend to provide an improved product for use as a fertiliser.

The substrate in this example is a commercially available rock phosphate broken down to an acceptable size. An average size of 3mm or less is considered to be useful, though this is a matter of user choice.

To the substrate is added, in an aqueous form, the nutrient/culture mixture which is absorbed into the rock phosphate to impregnate it. A ribbon blender/mixer may be used to mix components. The fluid components are typically added slowly or sprayed into the mixing vat.

While virtually any ratio of substrate:liquid may be used, it is preferable to use lower quantities of liquid if a substantially dry product is to be obtained. While slurries or suspensions of substrate may be used and are within the scope of the present invention, it is envisaged that these liquid forms are more suitable for application of the invention rather than as a form which may be stored for some time before application. If necessary, substantially dry forms may be convened into a slurry or liquid form prior to application.

In trials, less than 25% (by weight) liquid was added to the substrate, with around 10% being preferred for obtaining a substantially dry product. Once impregnated, the product may be dried though considerations include the extra time and cost for drying and the effect of excess drying on the included fungus or micro-organism. It is envisaged that in most, but not all, cases the product will have a free moisture content (by weight) of less than 25% and more likely 5-15% inclusive. By free moisture is meant water not present as waters of crystallisation of various components. The use of components able to remove excess water through crystallisation, or through a physical (e.g.. zeolites) or chemical reaction (e.g.. gypsum, calcium sulphate monohydrate, unslaked lime etc.), may also be used to create a product having the preferred water content and allow the addition of more dilute nutrient solutions during impregnation but still provide a substantially dry product.

### Example 2

Here the product substrate comprises a manufactured pellet. By way of example it may contain the following constituents:

| **Component** | **% by weight** [to total of 100%] |
|---|---|
| gypsum | up to 95% |
| lime | up to 95% |
| aluminosilicate | up to 95% |
| rock phosphate | 5% to 100% |
| a fertiliser or mixture containing nitrogen and/or potassium and/or trace elements | up to 90% |
| mineral or vegetable or other oil | up to 15% |
| water | up to 25% |
| biological material comprising fungus, micro-organisms and/or reproductive material | 0-5% (typical) |

Various aluminosilicates may be used and the term includes within its ambit clays such as kaolinite, bentonite, etc., and zeolites of which many are commercially available.

The added fertilisers generally comprise inorganic fertilisers generally include mineral and synthetic products, including various nitrates, phosphates, sulphates, chlorides etc. Materials based on organic materials such as plant or animal matter may be used, but these shall not fall within the term 'inorganic'.

The weight of the included biological material is typically only that of the material, not including any culture or growth medium, which may comprise an additional constituent of the product. A relatively porous pellet is obtained which is impregnated with a nutrient/culture mixture (if not incorporated into the manufactured substrate) in the same manner as example 1.

### Example 3

This comprises a manufactured pellet as described in example 2 but wherein culture medium (comprising the fungus or micro-organism) is blended substantially homogeneously with the pellet components before pellet formation. Nutrients are incorporated into the pellets by liquid impregnation.

### Example 4

As for example 3 but wherein the culture medium is introduced through liquid impregnation after pellet formation.

### Example 5

Here the product comprises either a manufactured pellet or bland of components which may be substantially particulate or powdered in form. The constituents are as follows:

| **Component** | **% by weight** [to total of 100%] |
|---|---|
| rock or insoluble phosphate | 35-80% |
| bentonite or bentonite predominant aluminosilicate | 20-65% |
| phosphate solubilising fungus, micro-organisms and/or reproductive material | trace-5% |
| liquid nutrients comprising at least one of an ammonium and/or amine containing nutrient, a fish based composition, and an animal protein based composition | 0-15% |

### Example 6

As for example 5 in which the nutrient chosen is a liquid fish based fertiliser. A suitable product is that available from Moana Fertilisers Limited or Sieber Agricultural Limited of Waiuku, New Zealand, or the equivalent thereof Manufacturer's data and specifications are available from the applicants.

### Example 7

As for examples 5 or 6 in which a substantially reversible hydrating constituent is included. This may comprise the use of a gel such as agar though may also comprise the use of a seaweed-fish based fertiliser such as that available from Moana Fertilisers Limited or Sieber Agricultural Limited of Waiuku, New Zealand, or an equivalent product. Another option is the use of the product AGROSOKE™.

### Example 8

This embodiment comprises a coated pellet (comprising a liquid nutrient impregnated substrate) in which the coating is a gel-like covering suitable for the rapid establishment and growth of contained biological material. Preferably this embodiment is directed to pelleted type embodiments where any one particle substantially comprises a substantially homogeneous blend of components. However, it could also be applied to non-pelleted mixtures, in which case it is preferred that the constituents are substantially non-powdered and preferably also not the larger or coarser sizes. It is envisaged that particle or pellet sizes which fall predominantly within the average size range of 2-5mm diameter will be most applicable for this particular embodiment though it is noted that a larger size could be tolerated for substantially homogeneous pellets.

The method comprises the application of a suitably viscous coating to particles. These particles could be any of the products from the previous examples, though with the above recommendations in mind. The nature of the coating is typically that of a gel and it is preferable that a gel which will further harden, perhaps via a setting reaction, or through the loss of water, is used. Typically the gelled coating will be applied while still in a fluid or semi-fluid state, though will eventually form a discrete coating on each particle which will not clog or bind particles together into a sticky mass.

Several methods may be used to achieve this. For instance, many gelling materials such as agar and gelatine (among other examples), have a setting reaction. Consequently, these type of gelling agents may be used for the coating and applied before the setting reaction has climaxed.

As an alternative, moisture absorbent materials or hydrating agents within the particle could promote the formation of a suitable coating.

As a further modification, a free flow agent could be dusted or applied to the resulting coated particles to reduce the further possibility of particles sticking or binding to each other in the bulk form.

The coating may comprise a nutrient, such as the liquid fish based fertilisers available from Moana Fertiliser Limited. Other liquid nutrients could also be used, or a solution of solid nutrients. The use of a thicker seaweed based fish composition from Moana Fertiliser is also possible though additional gelling agents may be added prior to its application. If the coating of interest is sufficiently fluid, then rather than a discrete coating on the particle, the outer surface layers may impregnated so that an outer crust comprising part of the intended coating and part of the substrate may be formed. In some instances this can be just as effective as a discrete gelled coating.

Also likely to be included within the coating are the biologically active material as the coating is generally intended for use as a support for the rapid establishment of the biological material. However in some embodiments, the biological material may be applied to the substrate and under the coating. In this case the coating may also act as a protective layer for the material during storage. Each variation has its own inherent advantages and disadvantages, which the manufacturer can select as desired.

Application of the coating may be via a number of known methods, including a ribbon blender. However to some extent the method of coating will depend upon the viscosity and proportions of components.

### Example 9

This embodiment comprises rock phosphate material, typically of a size able to pass through a 10mm screen. Also present is other solid material which may comprise manufactured pellets such as from previous examples acting as a biological base for the establishment of contained active or reproductive material. The solid material, which may take the role of a filler or diluent for the phosphate material in the product, can also include other substantially mineral materials such as previously mentioned (e.g. aluminosilicates, clays, zeolites, gypsum, limes etc.).

The resulting mixture is then impregnated with a nutrient, which may also introduce biologically active material, especially if these components are not present in the included solid material. The mixture may also be further processed according to techniques detailed in the preceding examples and description.

### Nature of product.

In most cases the product will comprise a pellet or granule with a relatively low moisture content (25% or less and preferably 5-15%). The average particle size will often be 10mm or less, and more preferably 3mm or less. Finely powdered forms may also be used though typically the products will be granular in size, e.g. similar to coarse sand. This makes impregnation and mixing with liquid components easier.

The pellet of most embodiments will comprise essentially a substrate incorporating nutrients and a culture able to establish a growth of selected fungi and/or micro-organisms. These will normally remain relatively dormant while the product is in its preferred, relatively dry state. Some organisms may be better adapted than others for storage and many may have optimum storage conditions, which information is either known or may be found through relatively simple trial and experimentation.

Typically the product will be porous as many embodiments rely upon liquid impregnation to introduce some of the components. Porosity also allows the product to be 'activated' when wetted or rained upon. Porosity also influences how rapidly the product decays or releases its contents.

The product also represents a means of preparing a solid or 'dry' fertilising composition from a liquid fertiliser. This may in practice provide advantage as many fertilisers are transported in a dry form and consequently a large amount of equipment is adapted for dry or solid material. At least one embodiment of a product also represents a high phosphorus fertiliser which also contains other nutrients, according to the impregnated components. Phosphates are generally applied on their own or with lime - the present invention represents a means by which additional elements and useful micro-organisms/fungi can be applied during the same operation and perhaps without the necessity of separate liming.

Also, the nutrients will often tend to be released at a relatively slow rate, at least compared to a liquid fertiliser applied to pasture. This may be advantageous in areas of high rainfall where many liquid and some readily soluble solid fertilisers would be quickly washed from the soil. The rate of establishment of the fungus or other preferred micro-organisms may further regulate rapid leaching of nutrients from the product.

In practice, the product may be also used in many (but not every instance) as a method of packaging fungus or micro-organisms in a relatively dormant or transportable state. Providing that storage, manufacture and product use are within acceptable limits for the particular organism, the product may be used to initiate the growth of new colonies of the organism.

While a primary use is as a fertilising composition, where new and useful organisms may be introduced or supplemented into field and pasture, the invention may find other use. For instance it is suitable for the 'package' and transport of laboratory cultures. It may find use in culture depositories. It may also find use as a pharmaceutical device or feedstuff for animals. In such cases nutrients may be suited more towards the animal (e.g. minerals and vitamins) while the culture could be an organism which aids digestion (for instance by including micro-organisms present in the digestive system or which can improve the digestion of some materials), or which produces a useful enzyme, or which acts as an antibiotic. It is anticipated that a skilled reader, in light of the description herein, would be able to readily adapt the present invention for use in these other areas.

Aspects of the present invention have been described by way of example only and it should be appreciated that modifications and additions may be made thereto without departing from the scope thereof as defined in the appended claims.

## Claims

1. A substantially non-liquid fertiliser composition comprising
a solid substrate comprising a substantially insoluble phosphate material impregnated with an introduced liquid nutrient for the support or establishment of at least one phosphate solubilising fungus, micro-organism, or reproductive material therefor.

2. A fertiliser composition as claimed in claim 1 in which said phosphate material comprises a rock phosphate.

3. A fertiliser composition as claimed in claim 1 in which said nutrient comprises at least one of:
- an ammonium compound,
- an amine,
- a nitrogen source available to said fungus, micro-organism or reproductive material, and
- constituents which when acted upon by fungus or micro-organisms present in said composition, will liberate free ammonia.

4. A fertiliser composition as claimed in claim 3 which includes an introduced micro-organism, fungus, and/or reproductive material therefor, specifically directed to release free ammonia from nitrogen, amine or ammonium containing materials from an included nutrient.

5. A fertiliser composition as claimed in claim 1 in which a fungus, micro-organism or its reproductive material which is introduced to said substrate comprises a member of at least one of the species *Aspergillus, Fusarium* and *Penicillium.*

6. A fertiliser composition as claimed in claim 1 in which is present by introduction, at least one member or reproductive material therefor, of a group comprising:
*Fusarium Oxysporum*, *Fusarium Solani*, *Aspergillus Niger*, *Aspergillus Candidus*, *Aspergillus Flavus, Aspergillus Ustus, Penicillium Janthinellum, Penicillium* sp., *Sclerotium Rolfsii*, *Cylindrocladium* sp., *Trichoderma viride*, *Glocladium* sp., *Verticillum albo-atrum, Penicillum bilaji, Mortierella nana, Mortierella longicollis* and *Aspergillus terrens.*

7. A fertiliser composition as claimed in claim 1 in which there is present an introduced micro-organism comprising at least one member of the group of *Bacillus Megatherium phosphaticum* and strains thereof, *Gram-positive bacteria* and the species *Pseudomonas*.

8. A fertiliser composition as claimed in any one of claims 1 through 7 which includes at least one phosphate solubilising fungus, micro-organism, or reproductive material therefor.

9. A fertiliser composition as claimed in any one of claims 1 through 7 in which said nutirent comprises a fish based composition.

10. A fertiliser composition as claimed in claim 1 in which said nutrient comprises an animal based protein composition.

11. A fertiliser composition as claimed in claim 1 in which said reproductive material comprises fungal spores.

12. A fertiliser composition as claimed in claim 1 in which introduced micro-organisms, fungus or reproductive material therefor, are blended with said nutrient prior to its introduction to the mineral substrate.

13. A fertiliser composition as claimed in claim 1 in which said mineral substrate includes at least one member of a group comprising: aluminosilicate (as herein defined), lime, zeolite, and clay.

14. A fertiliser composition as claimed in claim 1 in which the constituents of said mineral substrate have been reduced to a size so that at least 90% will pass through a sieve with a rectangular mesh of 3mm by 3mm.

15. A fertiliser composition as claimed in claim 1 which includes either or both a binder for cementing constituents together, and a hydrating constituent which interacts with moisture.

16. A fertiliser composition as claimed in claim 15 in which said hydrating constituent retains fluid which is available for use by said introduced fungus, micro-organism or reproductive material therefor.

17. A fertiliser composition as claimed in claim 15 in which said hydrating constituent comprises at least one of a cross-linked polymer, and a silica gel.

18. A fertiliser composition as claimed in claim 1 which is a flowable, granular, or powdered material.

19. A fertiliser composition as claimed in claim 18 in which particles are treated or coated with a free flowing agent.

20. A fertiliser composition as claimed in claim 18 in which particles of material are coated with a material reducing moisture loss for the bulk stored product.

21. A substantially non-liquid fertiliser composition as claimed in claim 1 comprising:
- a solid substrate comprising a substantially insoluble phosphate material impregnated with an introduced liquid nutrient for the support or establishment of at least one phosphate solubilising fungus, micro-organism, or reproductive material therefor,
- particles of said solid substrate having a gelled coating

22. A fertiliser composition as claimed in claim 21 in which either or both the nutrient and gelled coating comprise a fish-based composition.

23. A fertiliser composition as claimed in claim 21 in which introduced phosphate solubilising fungus, micro-organism, or reproductive material therefor is present within said gelled coating.

24. A method for the preparation of a fertiliser composition comprising the introduction of a liquid nutrient capable of establishing or supporting an introduced phosphate solubilising fungus, micro-organism, or reproductive material therefor, to a mineral substrate comprising a substantially insoluble phosphate material.

25. A method as claimed in claim 24 in which a said mineral substrate comprises a rock phosphate or insoluble phosphate.

26. A method as claimed in claim 24 in which said fungus, micro-organism, or reproductive material therefor comprises at least one member of the group:
*Fusarium Oxysporum, Fusarium Solani, Aspergillus Niger, Aspergillus Candidus, Aspergillus Flavus, Aspergillus Ustus, Penicillium Janthinellum, Penicillium* sp., *Sclerotium Rolfsii, Cylindrocladium* sp., *Trichoderma viride, Glocladium* sp., *Verticillum albo-atrum, Penicillum bilaji, Mortierella nana, Mortierella longicollis* and *Aspergillus terrens.*

27. A method as claimed in claim 24 in which said introduced fungus, micro-organism or reproductive material, is introduced into said liquid nutrient which is subsequently applied to said mineral substrate.

28. A method as claimed in claim 24 which includes the introduction of at least one member of the following group:
free flow agents, water repelling materials, barrier coating materials, clays, aluminosilicates, zeolites, gypsums, fertilising compositions, materials containing plant available trace elements, and fish or marine based nutrient compositions.

29. A method as claimed in claim 24 in which a gelled coating is applied to particles of said substrate.

30. A method as claimed in claim 24 in which said liquid nutrient comprises either or both a fish based composition, and an animal based protein composition.

31. A method for increasing the solubilisation of substantially insoluble phosphate fertiliser materials comprising the introduction of impregnation of a liquid nutrient, and phosphate solubilising fungus, micro-organisms or reproductive material therefor to said phosphate fertiliser materials prior to their application to soil or pasture.

32. A method as claimed in claim 31 in which said phosphate solubilising fungus, micro-organisms or reproductive material therefor is introduced into a liquid nutrient capable or sustaining, supporting or establishing the growth of same, said liquid material then being introduced to the phosphate fertiliser material.

33. A method as claimed in claim 31 which includes the introduction of a fungus, micro-organisms or reproductive material therefor capable of releasing free ammonia from nitrogen, amine or ammonium containing materials.

## Patentansprüche

1. Eine im Wesentlichen nichtflüssige Düngemittelzusammensetzung, welche folgende Bestandteile aufweist:
ein festes Substrat, das ein im Wesentlichen unlösliches Phosphatmaterial enthält, welches mit einem zugeführten flüssigen Nährstoff imprägniert ist, zum Tragen oder Festsetzen von mindestens einem phosphatauflösenden Pilz, Mikroorganismus oder einem Reproduzierbarkeitsmaterial für dieselben.

2. Düngemittelzusammensetzung gemäß Anspruch 1, in welcher das Phosphatmaterial Rohphosphat enthält.

3. Düngemittelzusammensetzung gemäß Anspruch 1, in welcher der Nährstoff mindestens einen der folgenden Komponenten enthält:
- eine Ammoniumverbindung,
- ein Amin,
- eine für den Pilz, den Mikroorganismus oder das Reproduzierbarkeitsmaterial verfügbare Stickstoffquelle, und
- Bestandteile, die, wenn sie auf den in der Zusammensetzung vorliegenden Pilz oder Mikroorganismus einwirken, freies Ammoniak freisetzen.

4. Düngemittelzusammensetzung gemäß Anspruch 3, welche einen zugeführten Mikroorganismus, Pilz und/oder ein Reproduzierbarkeitsmaterial für dieselben beinhaltet, welch letztere speziell darauf ausgerichtet sind freies Ammoniak aus stickstoff-, amin- oder ammonium-haltigen Materialien aus einem eingeschlossenen Nährstoff freizusetzen.

5. Düngemittelzusammensetzung gemäß Anspruch 1, in welcher ein Pilz, ein Mikroorganismus oder ein Reproduzierbarkeitsmaterial derselben, welche dem Substrat zugeführt worden sind, ein Mitglied von mindestens einer der Arten *Aspergillus, Fusarium* und *Penicillium* enthalten.

6. Düngemittelzusammensetzung gemäß Anspruch 1, in welcher durch Zuführen mindestens ein Mitglied oder ein Reproduzierbarkeitsmaterial für dasselbe vorhanden ist, welches aus einer Gruppe herrührt mit den Mitgliedern:
*Fusarium oxysporum, Fusarium solani, Aspergillus niger, Aspergillus candidu*s, *Aspergillus flavus, Aspergillus ustus, Penicillium janthinellum, Penicillium* sp., *Sclerotium rolfsii, Cylindrocladium* sp. *Trichoderma viride*, *Glocladium* sp., *Verticillum albo-atrum, Penicillum bilaji, Mortierella nana, Mortierella longicollis* und *Aspergillus terrens*.

7. Düngemittelzusammensetzung gemäß Anspruch 1, in welcher ein zugeführter Mikroorganismus vorhanden ist, der mindestens ein Mitglied enthält, das herrührt aus der Gruppe von *Bacillus megathorium phoshaticum* und Stämmen derselben, Gram-positive Bakterien und den Arten *Pseudomonas*.

8. Düngemittelzusammensetzung gemäß irgendeinem der Ansprüche 1 bis 7, welche mindestens einen phosphatauflösenden Pilz, Mikroorganismus oder ein Reproduzierbarkeitsmaterial für dieselben enthält.

9. Düngemittelzusammensetzung gemäß irgendeinem der Ansprüche 1 bis 7, in welcher der Nährstoff eine auf Fisch basierende Zusammensetzung enthält.

10. Düngemittelzusammensetzung gemäß Anspruch 1, in welcher der Nährstoff eine auf Tiereiweiß basierende Zusammensetzung enthält.

11. Düngemittelzusammensetzung gemäß Anspruch 1, in welcher das Reproduzierbarkeitsmaterial Pilzsporen enthält.

12. Düngemittelzusammensetzung gemäß Anspruch 1, in welcher der zugeführte Mikroorganismus, Pilz oder das Reproduzierbarkeitsmaterial für dieselben im Vorfeld der Zuführung zu dem Mineralsubstrat mit dem Nährstoff vermischt werden.

13. Düngemittelzusammensetzung gemäß Anspruch 1, in welcher das Mineralsubstrat mindestens ein Mitglied aus der Gruppe enthält, welche die folgende Substanzen aufweist: Aluminosilikat (wie hierin definiert), Kalziumoxid, Zeolith und Ton.

14. Düngemittelzusammensetzung gemäß Anspruch 1, in welcher die Bestandteile des Mineralsubstrats auf eine solche Größe verkleinert worden sind, dass mindestens 90% durch ein Sieb mit rechteckigen Maschen von 3 mm auf 3 mm hindurchgehen.

15. Düngemittelzusammensetzung gemäß Anspruch 1, welche entweder eine oder beide der Komponenten enthält, und zwar Bindemittel zum Zementieren von Bestandteilen sowie hydratisierender Bestandteil der mit der Feuchtigkeit in Wechselwirkung tritt.

16. Düngemittelzusammensetzung gemäß Anspruch 15, in welcher der hydratisierende Bestandteil Flüssigkeit zurückhält, welche verfügbar wird zur Verwertung durch den zugeführten Pilz, Mikroorganismus oder das Reproduzierbarkeitsmaterial für dieselben.

17. Düngemittelzusammensetzung gemäß Anspruch 15, in welcher der hydratisierende Bestandteil mindestens eine Komponente enthält aus einem vernetzten Polymer und einem Silikagel.

18. Düngemittelzusammensetzung gemäß Anspruch 1, welche ein fließfähiges, körniges oder pulverförmiges Material ist.

19. Düngemittelzusammensetzung gemäß Anspruch 18, in welcher die Partikel mit einem frei fließenden Mittel behandelt oder beschichtet werden.

20. Düngemittelzusammensetzung gemäß Anspruch 18, in welcher die Materialpartikel mit einem Material beschichtet werden, welches den Feuchtigkeitsverlust bei dem als Schüttgut gelagerten Produkt vermindert.

21. Eine im Wesentlichen nichtflüssige Düngemittelzusammensetzung gemäß Anspruch 1, welche folgende Komponenten enthält:
- ein festes Substrat, das ein im Wesentlichen unlösliches Phosphatmaterial enthält, welches mit einem zugeführten flüssigen Nährstoff imprägniert ist, zum Tragen oder Festsetzen von mindestens einem phosphatauflösenden Pilz, Mikroorganismus oder einem Reproduzierbarkeitsmaterial für dieselben
- Partikel des festen Substrates, die eine gelierte Beschichtung tragen.

22. Düngemittelzusammensetzung gemäß Anspruch 21, in welcher entweder eine oder beide der Komponenten, nämlich der Nährstoff und die gelierte Beschichtung, eine auf Fisch basierende Zusammensetzung enthalten.

23. Düngemittelzusammensetzung gemäß Anspruch 21, in welcher der zugeführte phosphatauflösende Pilz, Mikroorganismus oder das Reproduzierbarkeitsmaterial für dieselben in der gelierten Beschichtung vorliegen.

24. Verfahren zum Herstellen einer Düngemittelzusammensetzung, welches folgenden Schritt enthält: das Zuführen eines flüssigen Nährstoffes, der fähig ist zum Festsetzen oder Tragen eines zugeführten phosphatauflösenden Pilzes, Mikroorganismus oder eines Reproduzierbarkeitsmaterials für dieselben auf einem Mineralsubstrat, das ein im Wesentlichen unlösliches Phosphatmaterial enthält.

25. Verfahren gemäß Anspruch 24, in welchem das Mineralsubstrat aus einem Rohphosphat oder einem unlöslichen Phosphat besteht.

26. Verfahren gemäß Anspruch 24, in welchem der Pilz, der Mikroorganismus oder das Reproduzierbarkeitsmaterial für dieselben mindestens ein Mitglied enthalten, welches herstammt von der Gruppe aus:
*Fusarium oxysporum, Fusarium solani, Aspergillus niger, Aspergillus candidus, Aspergillus flavus, Aspergillus ustus, Penicillium janthinellum, Penicillium* sp., *Sclerotium rolfsii, Cylindrocladium* sp., *Trichoderma viride, Glocladium* sp., *Verticillum albo-atrum, Penicillum bilaji, Mortierella nana, Mortierella longicollis* und *Aspergillus terrens*.

27. Verfahren gemäß Anspruch 24, in welchem der zugeführte Pilz, Mikroorganismus oder das Reproduzierbarkeitsmaterial in den flüssigen Nährstoff zugeführt werden, welcher anschließend auf das Mineralsubstrat aufgetragen wird.

28. Verfahren gemäß Anspruch 24, welches das Zuführen von mindestens einem Mitglied der folgenden Gruppe beinhaltet:
frei fließendes Mittel, wasserabstoßende Materialien, Sperrschichtmaterialien, Tone, Aluminosilikate, Zeolithe, Gipse, Düngemittelzusammensetzungen, Materialien die für Pflanzen zugängliche Spurenelement enthalten, und Fisch oder auf Meeresprodukten basierende Nährstoffzusammensetzungen.

29. Verfahren gemäß Anspruch 24, bei welchem eine gelierte Beschichtung auf die Partikel des Substrates aufgetragen wird.

30. Verfahren gemäß Anspruch 24, bei welchem der flüssige Nährstoff entweder eine oder beide der Komponenten, nämlich auf Fisch basierende Zusammensetzung sowie eine auf Trierprotein basierende Zusammensetzung, enthält.

31. Verfahren zum Erhöhen der Löslichkeit von im Wesentlichen unlöslichen Phosphatdüngemittelmaterialien, welches das Einleiten einer Imprägnierung eines flüssigen Nährstoffes, und eines phosphatauflösenden Pilzes, Mikroorganismus oder eines Reproduzierbarkeitsmaterial für dieselben zu den Phosphatdüngemittelmaterialien vor der Anwendung auf einem Boden oder einer Weide enthält.

32. Verfahren gemäß Anspruch 31, in welchem der phosphatauflösende Pilz, Mikroorganismus oder das Reproduzierbarkeitsmaterial für dieselben in den flüssigen Nährstoff zugeführt werden, welcher in der Lage ist das Wachstum derselben aufrechtzuerhalten, zu unterstützen oder einzuführen, wobei das flüssige Material anschließend dem Phosphatdüngemittelmaterial zugeführt wird.

33. Verfahren gemäß Anspruch 31, welches das Zuführen eines Pilzes, Mikroorganismus oder eines Reproduzierbarkeitsmaterial für dieselben einschließt, welche fähig sind zum Freisetzen von freiem Ammoniak aus stickstoff-, amin- oder ammoniumhaltigen Materialien.

## Revendications

1. Composition d'engrais substantiellement non liquide comprenant:
un substrat solide comprenant une substance phosphatée substantiellement insoluble imprégnée d'une substance nutritive liquide introduite pour le maintien en vie ou la formation d'au moins un champignon, un micro-organisme ou une substance reproductrice de ceux-ci, dissolvant le phosphate.

2. Composition d'engrais suivant la revendication 1, dans laquelle ladite substance phosphatée comprend un phosphate de roche.

3. Composition d'engrais suivant la revendication 1, dans laquelle ladite substance nutritive comprend au moins un composé parmi:
- un composé d'ammonium,
- une amine,
- une source d'azote disponible pour ledit champignon, ledit micro-organisme ou ladite substance reproductrice, et
- des constituants qui, lorsqu'un champignon ou des micro-organismes présents dans ladite composition agissent sur eux, vont libérer de l'ammoniaque libre.

4. Composition d'engrais suivant la revendication 3, qui inclut un micro-organisme, un champignon et/ou une substance reproductrice de ceux-ci introduits, spécialement destinée à libérer de l'ammoniaque libre à partir de substances contenant de l'azote, une amine ou de l'ammonium issues d'une substance nutritive incluse.

5. Composition d'engrais suivant la revendication 1, dans laquelle un champignon, un micro-organisme ou sa substance reproductrice qui est introduit dans ledit substrat comprend un élément d'au moins une espèce parmi les espèces *Aspergillus, Fusarium* et *Penicillium.*

6. Composition d'engrais suivant la revendication 1, dans laquelle est présent par introduction au moins un élément ou une substance reproductrice de celui-ci d'un groupe comprenant:
*Fusarium oxysporum, Fusarium solani, Aspergillus niger, Aspergillus candidus, Aspergillus flavus, Aspergillus ustus, Penicillium janthinellum, Penicillium* sp., *Sclerotium rolfsii, Cylindrocladium* sp., *Trichoderma viride, Glocladium* sp., *Verticillum albo-atrum, Penicillum bilaji, Mortierella nana, Mortierella longicollis* et *Aspergillus terrens.*

7. Composition d'engrais suivant la revendication 1, dans laquelle est présent un micro-organisme introduit comprenant au moins un élément du groupe de *Bacillus megatherium phosphaticum* et des lignées de celui-ci, de Gram-positive bacteria et de l'espèce *Pseudomonas*.

8. Composition d'engrais suivant l'une quelconque des revendications 1 à 7, qui inclut au moins un champignon, un micro-organisme ou une substance reproductrice de ceux-ci, dissolvant le phosphate.

9. Composition d'engrais suivant l'une quelconque des revendications 1 à 7, dans laquelle ladite substance nutritive comprend une composition à base de poisson.

10. Composition d'engrais suivant la revendication 1, dans laquelle ladite substance nutritive comprend une composition protéique animale.

11. Composition d'engrais suivant la revendication 1, dans laquelle ladite substance reproductrice comprend des spores fongiques.

12. Composition d'engrais suivant la revendication 1, dans laquelle les micro-organismes, le champignon ou la substance reproductrice de ceux-ci introduits sont mélangés avec ladite substance nutritive avant son introduction dans le substrat minéral.

13. Composition d'engrais suivant la revendication 1, dans laquelle ledit substrat minéral inclut au moins un élément d'un groupe comprenant: un aluminosilicate (comme il est défini dans le présent document), de la chaux, une zéolite et une argile.

14. Composition d'engrais suivant la revendication 1, dans laquelle les constituants dudit substrat minéral ont été réduits à une taille de sorte qu'au moins 90% passeront à travers un tamis avec une maille rectangulaire de 3 mm sur 3 mm.

15. Composition d'engrais suivant la revendication 1, qui inclut l'un ou l'autre ou les deux parmi un liant pour cimenter ensemble les constituants et un constituant hydratant qui interagit avec l'humidité.

16. Composition d'engrais suivant la revendication 15, dans laquelle ledit constituant hydratant retient un fluide qui est disponible pour être utilisé par ledit champignon, ledit micro-organisme ou ladite substance reproductrice de ceux-ci introduit.

17. Composition d'engrais suivant la revendication 15, dans laquelle ledit constituant hydratant comprend au moins un composé parmi: un polymère réticulé et un gel de silice.

18. Composition d'engrais suivant la revendication 1, qui est une substance fluide, granulaire ou sous forme de poudre.

19. Composition d'engrais suivant la revendication 18, dans laquelle les particules sont traitées ou enrobées avec un agent s'écoulant librement.

20. Composition d'engrais suivant la revendication 18, dans laquelle les particules de substance sont enrobées avec une substance réduisant la perte d'humidité pour le produit stocké en vrac.

21. Composition d'engrais substantiellement non liquide suivant la revendication 1, comprenant:
- un substrat solide comprenant une substance phosphatée substantiellement insoluble imprégnée d'une substance nutritive liquide introduite pour le maintien en vie ou la formation d'au moins un champignon, un micro-organisme ou une substance reproductrice de ceux-ci, dissolvant le phosphate,
- des particules dudit substrat solide avec un enrobage gélifié.

22. Composition d'engrais suivant la revendication 21, dans laquelle l'un ou l'autre ou les deux parmi la substance nutritive et l'enrobage gélifié comprend une composition à base de poisson.

23. Composition d'engrais suivant la revendication 21, dans laquelle le champignon, le micro-organisme ou la substance reproductrice de ceux-ci, dissolvant le phosphate, introduit est présent dans ledit enrobage gélifié.

24. Procédé pour la préparation d'une composition d'engrais comprenant l'incorporation d'une substance nutritive liquide susceptible de former ou de maintenir en vie un champignon, un micro-organisme ou une substance reproductrice de ceux-ci, dissolvant le phosphate, introduit dans un substrat minéral comprenant une substance phosphatée substantiellement insoluble.

25. Procédé suivant la revendication 24, dans lequel ledit substrat minéral comprend un phosphate de roche ou un phosphate insoluble.

26. Procédé suivant la revendication 24, dans lequel ledit champignon, ledit micro-organisme ou ladite substance reproductrice de ceux-ci comprend au moins un élément du groupe:
*Fusarium oxysporum*, *Fusarium solani, Aspergillus figer, Aspergillus candidus, Aspergillus flavus, Aspergillus ustus, Penicillium janthinellum, Penicillium* sp., *Sclerotium rolfsii, Cylindrocladium* sp., *Trichoderma viride, Glocladium* sp., *Verticillum albo-atrum, Penicillum bilaji, Mortierella nana, Mortierella longicollis* et *Aspergillus terrens.*

27. Procédé suivant la revendication 24, dans lequel ledit champignon, ledit micro-organisme ou ladite substance reproductrice introduit est incorporé dans ladite substance nutritive liquide qui est ensuite appliquée audit substrat minéral.

28. Procédé suivant la revendication 24, qui inclut l'introduction d'au moins un élément du groupe suivant:
agents s'écoulant librement, substances hydrophobes, substances d'enrobage barrière, argiles, aluminosilicates, zéolites, gypses, compositions fertilisantes, substances contenant des éléments en traces disponibles pour les plantes et compositions nutritives à base de poisson ou marines.

29. Procédé suivant la revendication 24, dans lequel un enrobage gélifié est appliqué aux particules dudit substrat.

30. Procédé suivant la revendication 24, dans lequel ladite substance nutritive liquide comprend l'un ou l'autre ou les deux parmi une composition à base de poisson et une composition protéique animale.

31. Procédé pour augmenter la dissolution de substances fertilisantes phosphatées substantiellement insolubles comprenant l'introduction d'une imprégnation d'une substance nutritive liquide et d'un champignon, de micro-organismes ou d'une substance reproductrice de ceux-ci dissolvant le phosphate dans lesdites substances fertilisantes phosphatées avant leur application à un sol ou à un pâturage.

32. Procédé suivant la revendication 31, dans lequel ledit champignon, ledit micro-organisme ou ladite substance reproductrice de ceux-ci dissolvant le phosphate est introduit dans une substance nutritive liquide susceptible de soutenir, de maintenir en vie ou d'établir la croissance de ces derniers, ladite substance liquide étant ensuite introduite dans la substance fertilisante phosphatée.

33. Procédé suivant la revendication 31, qui inclut l'introduction d'un champignon, d'un micro-organisme ou d'une substance reproductrice de ceux-ci susceptible de libérer de l'ammoniaque libre à partir de substances contenant de l'azote, une amine ou de l'ammonium.
